# EUROPEAN PATENT SPECIFICATION

(11) **EP 1 739 931 B1**
(45) Date of publication and mention of the grant of the patent: **20.11.2013**
(21) Application number: 06013535.7
(22) Date of filing: 29.06.2006
(51) Int. Cl.: H04M 1/02

(54) **Portable terminal having slidable and foldable housings**
Tragbares Endgerät mit verschiebbaren und klappbaren Gehäusen
Terminal portable comprenant des boîtiers pliables et coulissants

(30) Priority: 30.06.2005 KR 20050058527
(43) Date of publication of application: 03.01.2007
(73) Proprietor: Samsung Electronics Co., Ltd., Suwon-si, Gyeonggi-do, 443-742 (KR)
(72) Inventor: Kim, Young S., Yeongtong-gu Suwon-si Gyeonggi-do (KR)
(74) Representative: Grünecker, Kinkeldey, Stockmair & Schwanhäusser

(56) References cited:
- WO-A-03/034695
- JP-A- 2001 024 762
- US-A- 5 978 655

## Description

The present invention relates to a portable terminal including a cellular phone, a Personal Digital Assistant (PDA), Personal Communication System (PCS), a Digital Multimedia Broadcasting Phones (DMB phone), a camera phone, a device for sending a short message, an internet phone and the like, and more particularly to a portable terminal which has a sliding housing that can slide and a foldable housing that can carry out folding and unfolding movements.

In general, a "portable terminal" refers to an electronic device that a user can carry to communicating with another user wirelessly. With respect to portability, designs of such a portable terminal tend not only to be compact, slim and lightweight, but also are moving toward providing multimedia capability and a wider variety of functions. In particular, future portable terminals are expected to be not only multi-functional, compact and lightweight, but also modifiable to suit functioning in a multimedia environment and able to provide internet access and functions. Additionally, such portable terminals may be used by men and women, young and old, anywhere in the world, and are recognized as a necessity.

Conventional portable terminals may be classified into various types according to their appearance, such as bar-type portable terminals, flip-type portable terminals and folder-type portable terminals. The bar-type portable terminal has a single housing shaped like a bar. The flip-type portable terminal has a flip panel that is pivotally mounted to a bar-shaped housing by a hinge unit. The folder-type portable terminal has a folder coupled to a single bar-shaped housing by a hinge unit in such a manner that the folder can be rotated in order to fold or unfold from the housing.

Further, portable terminals may be classified as neck wearable-type terminals and wrist wearable-type terminals, according to the position at or the manner in which a user wears the terminal. The neck wearable-type terminal is worn around the user's neck using a lanyard or necklace, while the wrist wearable-type terminal is worn around the user's wrist.

Additionally, portable terminals may be classified as rotation-type terminals and sliding-type terminals according to the manner of opening and closing the terminals. Regarding the rotation-type portable terminal, two housings are coupled to each other in a manner such that one housing rotates to an open or closed position relative to the other while the housings face each other. Regarding the sliding-type portable terminal, two housings are coupled to each other in a manner such that one housing slides open or closed relative to the other housing. The various classifications of portable terminals are easily understood by those skilled in the art.

Further, each of the conventional portable communication terminals has been converted so as to provide voice communication as well as high-speed data communication. That is, as consumer demands have increased, various services have been provided using wireless communication technology for transmitting and receiving data at a high speed.

It is a present tendency to have a camera lens mounted to the portable communication terminal, and to provide the terminal with the ability to transmit image signals and the like. Meanwhile, present portable communication terminals are provided with an embedded or external camera lens module. Therefore, it is possible to perform image communication with a desired partner or to photograph a desired subject.

However, although the sliding-type portable terminal includes a display unit having a wider screen, it is complicated and inconvenient to input data with the conventional sliding type terminal. Further, although the conventional folding-type portable terminal has an advantage of small size, operating the keys thereon is inconvenient.

The above-mentioned key operation includes inputting a large quantity of data, for activities such as chatting, word processing and the like. For the sake of convenience in a user interface environment, there has grown a need for a user interface for rapid and accurate input of desired data with both hands rather than one hand.

To satisfy the requirement, it is necessary to change an arrangement of a display unit and keypads. Accordingly, a portable terminal having advantages of both a sliding type portable terminal and a folding type portable terminal is necessary.

US 5 978 655 A relates to an information processing apparatus having a transmission antenna and a reception antenna. Both antennas are situated in substantially the same plane. The reception antenna is provided in parallel to said transmission antenna and situated to overlap said transmission antenna by a predetermined length. Adjusting means are provided for adjusting the length of the overlapping portion of the transmission antenna and the reception antenna, whereby an optimal positional relationship between the transmission antenna and the reception antenna is determined to reduce the electromagnetic mutual interference to a minimum. The apparatus further comprises display means and input means for inputting data to be processed by processing means. Means for sliding said transmission antenna and said reception antennas relative to each other, wherein the transmission and reception antennas are slid relative to each other to a stop position, are also provided. Furthermore, the apparatus includes means for folding said transmission antenna and said reception antenna toward each other.

WO 03/034695 A relates to a device for entering telephony and textual input, the device having a display and a plurality of buttons, the buttons being labeled for textual input on the horizontal axis which is parallel to the long dimension and for telephony input on their vertical axis which is parallel to the short dimension of the device. In particular, the device has a simplified QWERTY keyboard divided into two portions. In one embodiment, a sliding cover is provided and according to whether the sliding cover is in a closed position or an opened position, the device provides a telephony input mode or a textual input mode, respectively. In another embodiment, in place of the sliding cover of the previous embodiment, the device has a pivoting cover that rotates around a pin. To operate the device in textual input mode, the user flips up the pivoting cover. When the pivoting cover is flipped up, the full display is available, including a simplified QWERTY keyboard, which is divided into two portions.

Accordingly, the present invention has been made to solve the above-mentioned problems occurring in the prior art.

The object of the present invention is to provide a portable terminal that has both advantages of sliding-type and folding-type portable terminals to provide a most suitable interface for a user.

This object is solved by the subject matter of the independent claims.

Preferred embodiments are defined in the dependent claims.

An aspect of the present invention is to provide a portable terminal that has the QWERTY key arrangement, the key arrangement for a personal computer, so that a user can easily input a large quantity of data with both hands.

Another aspect of the present invention is to provide a portable terminal that improves convenience in data input compared with the conventional portable terminal having the same size.

A further aspect of the present invention is to provide a portable terminal that improves the convenience in data input with a miniaturized size.

In order to accomplish the above, there is provided a portable terminal which includes a first housing, a second housing which slides on the first housing in a state in which it faces the first housing, for opening and closing a predetermined portion of an upper surface of the first housing, a third housing which is connected to the first housing to rotate in a direction away from a bottom surface of the first housing, for opening and closing a predetermined portion of the bottom surface of the first housing and a hinge unit for connecting the first housing to the third housing.

The present invention will be more apparent from the following detailed description taken in conjunction with the accompanying drawings, in which:
FIG. 1 is a perspective view showing a portable terminal according to a preferred embodiment of the present invention;
FIG. 2 is a perspective view showing the portable terminal according to the preferred embodiment of the present invention, in which a second housing of the portable terminal is sliding on a first housing of the portable terminal;
FIG. 3 is a perspective view showing the portable terminal according to the preferred embodiment of the present invention, in which the second housing of the portable terminal has slid and a third housing has been completely unfolded; and
FIG. 4 is a front view showing the portable terminal according to the preferred embodiment of the present invention shown in FIG. 3.

Hereinafter, the preferred embodiment of the present invention will be described with reference to the accompanying drawings. In the following description of the present invention, a detailed description of known functions and configurations incorporated herein is omitted for the sake of clarity.

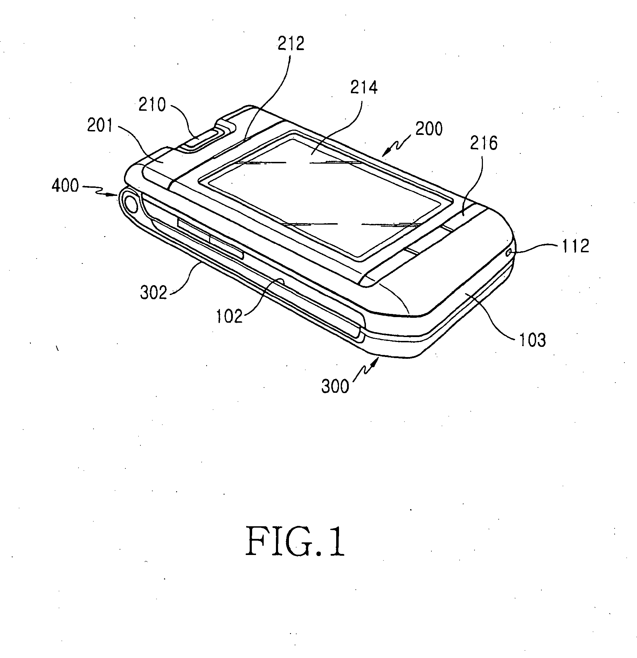

As shown in FIGS. 1 to 3, the portable terminal according to the present invention includes a first housing 100, a second housing 200 and a third housing 300. The second housing 200 is slidable on the first housing 100, while the third housing 300 can be folded onto and unfolded from the first housing 100.

According to this structure, the present invention can provide various modes to the portable terminal such as a sliding movement of the second housing 200 and an unfolding movement of the third housing 300. When the second housing 200 slides, a first region of the first housing 100 is exposed around the second housing 200 to become operable. In addition, a second region of the third housing 300 is also exposed around the second housing 200 to become operable when the third housing 300 is unfolded.

A first keypad 110 including a plurality of keys is disposed in the first region, while a second keypad 310 including a plurality of keys is disposed in the second region.

Specifically, the portable terminal of the present invention includes the second housing 200 which opens and closes a predetermined portion of an upper surface 101 of the first housing 100 while facing the upper surface 101 of the first housing 100 and the third hosing 300 which rotates in a direction away from a bottom surface 102 of the first housing 100 for use while facing the bottom surface 102 of the first housing 100 during a standby state.

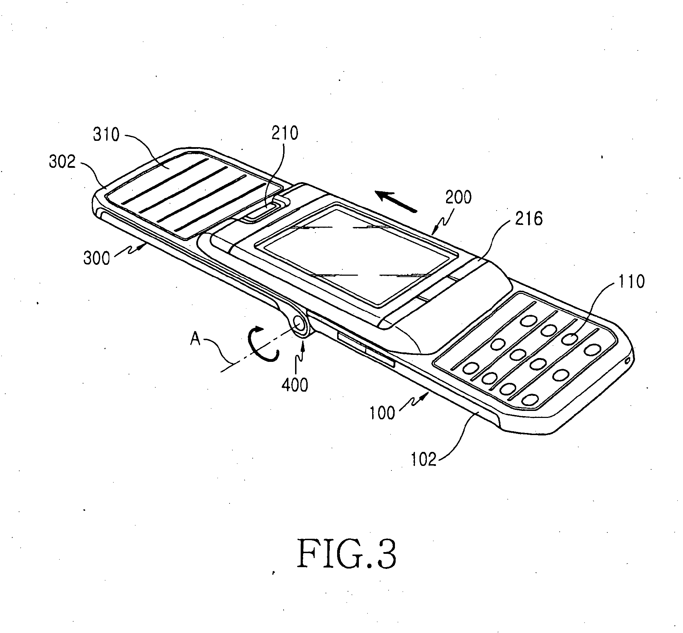

A hinge unit 400 connecting the first housing 100 with the third housing 300 is disposed in the first housing 100. A hinge axis of the third housing 300 is normal to a direction in which the second housing 200 is slid. The third housing 300 is folded to or unfolded from the bottom surface 102 of the first housing 100. In the state shown in FIG. 1, the first, second and third housings 100, 200 and 300 are in a stacked position. When second and third housings 200 and 300 are completely moved, as shown in FIG. 3, the first, second and third housings 100, 200 and 300 are aligned in a lengthwise direction of the first housing 100.

Preferably, the sliding movement of the second housing 200 and the rotating movement of the third housing 300 can be semi-automatically performed. However, it is to be understood that the sliding movement of the second housing 200 and the rotating movement of the third housing 300 can be automatically or manually carried out. In order to automatically carry out the sliding movement and the rotating movement, driving sources such as a known-electric motor and a reduction module or reduction gearbox connected to the electric motor, are incorporated into the portable terminal. Meanwhile, in order to semi-automatically perform the sliding and rotating movements, driving sources such as a spring to supply force to open and close a folder and slider, are incorporated into the portable terminal.

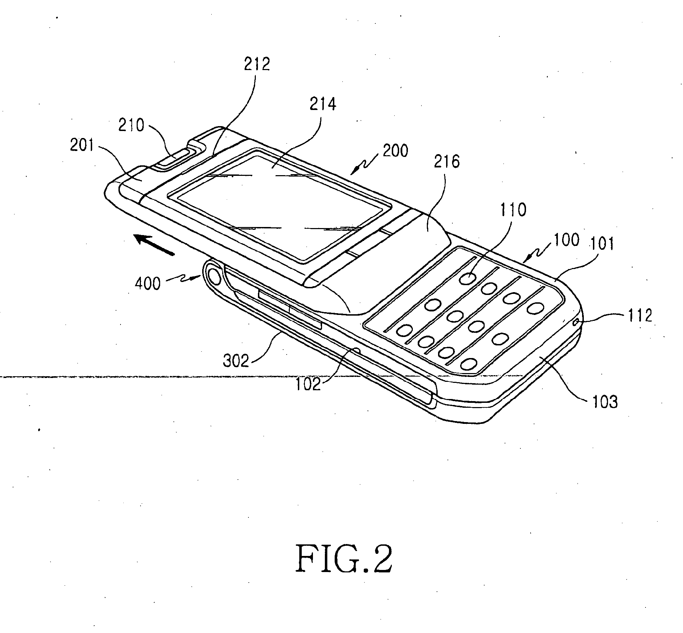

As shown in FIG. 2, a first keypad 110 including a plurality of keys is disposed at a predetermined portion on an upper surface 101 of the first housing 100, which is opened and closed as the second housing 200 slides on the first housing 100. The first keypad 110 includes numeric keys.

As shown in FIG. 3, a second keypad 310 including a plurality of keys is disposed on the bottom surface 302 of the third housing 300, which is always opened. The second keypad 310 includes character keys.

As shown in FIG. 1, a third keypad 216 is disposed on an upper surface 201 of the second housing 200, on which a camera lens 210, a speaker unit 212, a display unit 214 and a plurality of keys are arranged. The camera lens 210 can be rotated. Further, a microphone unit 112 is disposed at an edge 103 of a body of the first housing 100.

As shown in FIG. 3, when the second housing 200 slides along the first housing 100 and the third housing 300 is unfolded from the first housing 100, the first and third housings 100 and 300 are symmetrical with respect to the second housing 200. Particularly, when the second housing 200 slides along the first housing 100 and the third housing 300 is unfolded from the first housing 100, the second and third housings 200 and 300 are aligned in a lengthwise direction of the first housing 100 to create a bar-type body. Furthermore, when the second housing 200 completely slides on the first housing 100 and the third housing 300 is completely unfolded from the first housing 100, the first and second keypads 110 and 310 are symmetrical with respect to the second housing 200, particularly the display unit 214. In addition, the camera lens 210 is placed near the second keypad 310 while the third keypad 216 is positioned adjacent to the first keypad 110, as shown in FIG. 3.

The second housing 200 linearly moves on the upper surface 101 of the first housing 100, while the third housing 300 rotates in a direction away from the bottom surface of the first housing 100, unless the third housing 300 continuously faces the bottom surface 102 of the first housing 100.

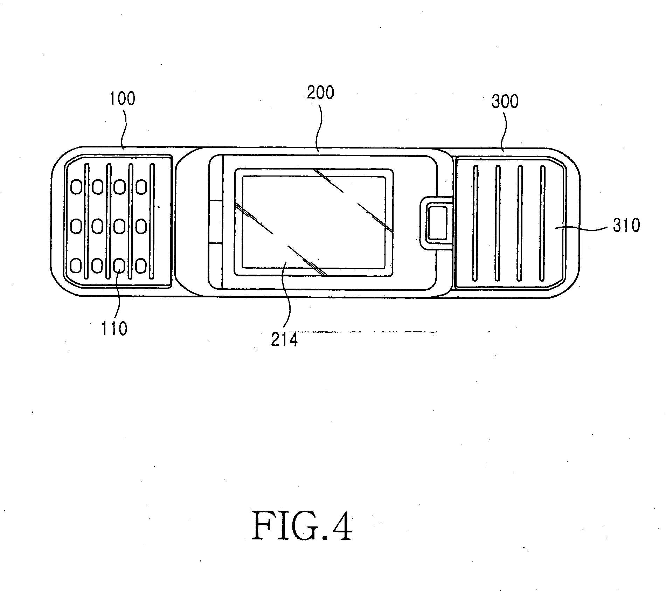

FIG. 4 shows the first and second keypads 110 and 310 that are arranged at both sides of the display unit 214. The first and second keypads 110 and 310 are convenient in that a user can operate the keys of the first and second keypads 110 and 310 with both hands.

The convenience of key operation allows substantial data to be input rapidly and accurately. In the state shown in FIG. 4, modes such as a game mode, substantial data input mode, an image communication mode and a chatting mode are conveniently performed.

As described above, the portable terminal according to the present invention has the advantages of both the sliding-type and folder-type portable terminals, which enable use of the QWERTY keys, thereby making it possible to perform key operation in an easier and more convenient manner. In addition, the present invention improves the convenience in data input in a portable terminal by allowing both hands to be used, while achieving the miniaturization of the portable terminal.

While the invention has been shown and described with reference to certain preferred embodiments thereof, it will be understood by those skilled in the art that various changes in form and details may be made therein without departing from the scope of the invention as defined by the appended claims.

## Claims

1. A portable terminal comprising:
a first housing (100) comprising a first keypad (110) on a predetermined portion of an upper surface of the first housing;
a second housing (200) that is slidable on the first housing in a manner in which it continuously faces the first housing, for opening and closing the predetermined portion of the upper surface of the first housing, the second housing comprising a display unit (214);
a third housing (300) connected to the first housing to rotate in a direction away from a bottom surface of the first housing, the third housing comprising a second keypad (310); and
a hinge unit for connecting the first housing to the third housing,
wherein the first keypad and the second keypad are adapted to be exposed adjacent to the second housing for use of the first and third housings.

2. The portable terminal as claimed in claim 1, wherein the first keypad including a plurality of keys is opened and closed as the second housing is slid, and the second keypad including a plurality of keys is disposed on a bottom surface of the third housing, the second keypad being always exposed.

3. The portable terminal as claimed in claim 2, wherein the first and second keypads have a QWERTY key arrangement.

4. The portable terminal as claimed in one of claims 1 to 3, wherein the first and third housings are symmetrical with respect to the second housing when the second housing slides on the first housing while the third housing is unfolded from the first housing.

5. The portable terminal as claimed in one of claims 1 to 4, wherein the second and third housings are aligned in a lengthwise direction of the first housing when the second housing is slid on the first housing while the third housing is unfolded from the first housing.

6. The portable terminal as claimed in claim 2, wherein the first and second keypads are disposed at an upper side and a lower side, respectively, of the second housing when the second housing slides on the first housing while the third housing is unfolded from the first housing.

7. The portable terminal as claimed in one of claims 1 to 6, wherein the second housing has a camera lens and a third keypad that includes a plurality of keys.

8. The portable terminal as claimed in one of claims 1 to 7, wherein the third housing has a hinge axis normal to a sliding direction of the second housing and is rotatable in a direction away from a bottom surface of the first housing unless the third housing continuously faces the bottom surface of the first housing.

## Patentansprüche

1. Tragbares Endgerät, das umfasst:
ein erstes Gehäuse (100), das ein erstes Tastenfeld (110) an einem vorgegebenen Abschnitt einer oberen Fläche des ersten Gehäuses umfasst;
ein zweites Gehäuse (200), das an dem ersten Gehäuse so verschoben werden kann, dass es dabei dem ersten Gehäuse durchgehend zugewandt ist, um den vorgegebenen Abschnitt der oberen Fläche des ersten Gehäuses zu öffnen und zu schließen, wobei das zweite Gehäuse eine Anzeigeeinheit (214) umfasst;
ein drittes Gehäuse (300), das mit dem ersten Gehäuse verbunden ist und sich in einer Richtung von einer unteren Fläche des ersten Gehäuses weg dreht, wobei das dritte Gehäuse ein zweites Tastenfeld(310) umfasst; und
eine Scharniereinheit, die das erste Gehäuse mit dem dritten Gehäuse verbindet,
wobei das erste Tastenfeld und das zweite Tastenfeld so eingerichtet sind, dass sie zur Nutzung des ersten und des dritten Gehäuses an das zweite Gehäuse angrenzend freigelegt werden.

2. Tragbares Endgerät nach Anspruch 1, wobei das erste Tastenfeld, das eine Vielzahl von Tasten enthält, geöffnet und geschlossen wird, wenn das zweite Gehäuse verschoben wird, sich das zweite Tastenfeld, das eine Vielzahl von Tasten enthält, an einer unteren Fläche des dritten Gehäuses befindet und das zweite Tastenfeld stets freigelegt ist.

3. Tragbares Endgerät nach Anspruch 2, wobei das erste und das zweite Tastenfeld eine QWERTY-Tastenanordnung haben.

4. Tragbares Endgerät nach einem der Ansprüche 1 bis 3, wobei das erste und das dritte Gehäuse in Bezug auf das zweite Gehäuse symmetrisch sind, wenn das zweite Gehäuse an dem ersten Gehäuse gleitet, während das dritte Gehäuse von dem ersten Gehäuse weg geklappt wird.

5. Tragbares Endgerät nach einem der Ansprüche 1 bis 4, wobei das zweite und das dritte Gehäuse in einer Längsrichtung des ersten Gehäuses ausgerichtet sind, wenn das zweite Gehäuse an dem ersten Gehäuse verschoben wird, während das dritte Gehäuse von dem ersten Gehäuse weg geklappt wird.

6. Tragbares Endgerät nach Anspruch 2, wobei sich das erste und das zweite Tastenfeld an einer oberen Seite bzw. einer unteren Seite des zweiten Gehäuses befinden, wenn das zweite Gehäuse an dem ersten Gehäuse gleitet, während das dritte Gehäuse von dem ersten Gehäuse weg geklappt wird.

7. Tragbares Endgerät nach einem der Ansprüche 1 bis 6, wobei das zweite Gehäuse ein Kameraobjektiv sowie ein drittes Tastenfeld aufweist, das eine Vielzahl von Tasten enthält.

8. Tragbares Endgerät nach einem der Ansprüche 1 bis 7, wobei das dritte Gehäuse eine Scharnierachse senkrecht zu einer Gleitrichtung des zweiten Gehäuses hat und in einer Richtung von einer unteren Fläche des ersten Gehäuses weg gedreht werden kann, sofern nicht das dritte Gehäuse durchgehend der unteren Fläche des ersten Gehäuses zugewandt ist.

## Revendications

1. Terminal portable comprenant :
un premier boîtier (100) comprenant un premier clavier (110) sur une partie prédéterminée de la surface supérieure du premier boîtier ;
un deuxième boîtier (200) pouvant coulisser sur le premier boîtier de telle manière qu'il reste toujours tourné vers le premier boîtier, pour ouvrir et fermer la partie prédéterminée de la surface supérieure du premier boîtier, le deuxième boîtier comprenant une unité d'affichage (214) ;
un troisième boîtier (300) relié au premier boîtier pour tourner dans une direction s'éloignant de la surface inférieure du premier boîtier, le troisième boîtier comprenant un deuxième clavier (310) ; et
une unité d'articulation pour relier le premier boîtier au troisième boîtier,
dans lequel le premier clavier et le deuxième clavier sont adaptés à être exposés de manière adjacente au deuxième boîtier pour utiliser les premier et troisième boîtiers.

2. Terminal portable selon la revendication 1, dans lequel le premier clavier incluant une pluralité de touches est ouvert et fermé lorsque le deuxième boîtier est glissé, et le deuxième clavier incluant une pluralité de touches est disposé sur la surface inférieure du troisième boîtier, le deuxième clavier étant toujours exposé.

3. Terminal portable selon la revendication 2, dans lequel les premier et deuxième claviers comportent un agencement de touches QWERTY.

4. Terminal portable selon l'une des revendications 1 à 3, dans lequel les premier et troisième boîtiers sont symétriques par rapport au deuxième boîtier lorsque le deuxième boîtier glisse sur le premier boîtier tandis que le troisième boîtier est déplié par rapport au premier boîtier.

5. Terminal portable selon l'une des revendications 1 à 4, dans lequel les deuxième et troisième boîtiers sont alignés dans le sens de la longueur du premier boîtier lorsque le deuxième boîtier est glissé sur le premier boîtier tandis que le troisième boîtier est déplié par rapport au premier boîtier.

6. Terminal portable selon la revendication 2, dans lequel les premier et deuxième claviers sont respectivement disposés sur la face supérieure et la face inférieure du deuxième boîtier lorsque le deuxième boîtier glisse sur le premier boîtier tandis que le troisième boîtier est déplié par rapport au premier boîtier.

7. Terminal portable selon l'une des revendications 1 à 6, dans lequel le deuxième boîtier comporte une lentille de dispositif de prise de vue et un troisième clavier incluant une pluralité de touches.

8. Terminal portable selon l'une des revendications 1 à 7, dans lequel le troisième boîtier possède un axe d'articulation normal par rapport à la direction de glissement du deuxième boîtier et peut tourner dans une direction s'éloignant de la surface inférieure du premier boîtier sauf si le troisième boîtier reste tourné vers la surface inférieure du premier boîtier.
